# DEMANDE DE BREVET EUROPEEN

(11) **EP 1 798 902 A1**
(43) Date de publication de la demande: **20.06.2007**
(21) Numéro de dépôt: 06291913.9
(22) Date de dépôt: 12.12.2006
(51) Int. Cl.: H04L 12/28

(54) **Système de communication entre terminaux domotiques raccordés à internet**

(30) Priorité: 13.12.2005 FR 0512601
(71) Demandeur: Zodianet, 91120 Palaiseau (FR)
(72) Inventeur: Gauthier, Jean-Pierre, 91120 Palaiseau (FR)
(74) Mandataire: Breese Derambure Majerowicz

(57) **Abrégé**

La présente invention concerne un système de communication entre terminaux domotiques raccordés à Internet.

Les terminaux 600 sont connectés à différents sous réseaux domestiques lesquels sont raccordés à un commutateur 300. Une interface Internet 100 sur ce commutateur permet à un utilisateur de configurer les terminaux par email ou par HTTP par un mécanisme de requête de sorte que ceux-ci puissent communiquer et interagir entre eux selon des scénarios spécifiques. Ledit commutateur diffuse des requêtes entre terminaux de manière synchrone ou asynchrone de sorte que des terminaux basse consommation cycliquement en veille reçoivent les requêtes commutées antérieurement pendant une période de veille. Lesdits terminaux peuvent partager et modifier des variables globales mémorisées par le commutateur.

## Description

La présente invention concerne un système de communication entre terminaux domotiques raccordés à Internet.

Le déploiement d'Internet haut débit et du courrier électronique chez les particuliers permet à chacun de communiquer par écrit avec un temps de transmission pratiquement nul et de recevoir des messages en continu, sans heure de distribution du courrier. D'autre part la miniaturisation et la banalisation de l'électronique permettent le pilotage d'appareils domestiques à partir de liaisons sans fil ou sur courant porteur pour un coût raisonnable. Une multitude de périphériques est déjà ainsi proposée selon la norme « domotique » sur courant porteur dite 'X10' (marque enregistrée de X-10 Incorporated, USA) largement déployée aux Etats-Unis et plus récemment introduite en Europe. La conjonction d'Internet et de terminaux à faible coût répartis dans l'habitat ouvre la voie d'applications novatrices ainsi que de nouveaux services offerts sur des applications existantes (sécurité, télémesure, domotique etc...).

La commande à distance d'appareils domestiques à partir d'e-mails a déjà été proposée par le projet Aladdin de Microsoft Corporation dans la publication « A Toolkit for Building Dependable and Extensible Home Networking Applications » par Yi-Min Wang, Wilf Russell, Anish Arora, Feb. 14, 2000 et qui a fait l'objet d'une demande de brevet PCT WO 01/13185 A2. Ce brevet décrit essentiellement un élégant et puissant mécanisme d'enregistrement de terminaux en réseau, de type « prêt à tourner » *(plug and play),* dans une ou plusieurs tables d'association (services de consultation de tables) et de contrôle de présence de ces objets par une table d'états (ou *soft-state store)* mise à jour selon l'initiative et une activité périodique de ces objets. Le pilotage d'appareils X10 par email a d'autre part déjà fait l'objet de réalisations commerciales comme par exemple le logiciel « *Homeseer »* de la société Homeseer Technologies (USA). Ces références aideront le lecteur à bien comprendre le contexte d'utilisation et les usages possibles d'appareils commandés à partir d'Internet.

Une architecture comportant une « base » centralisatrice connectée à Internet et à laquelle sont connectés différents terminaux pose un problème d'évolutivité. En effet, l'ajout d'un nouveau terminal demande une mise à jour du logiciel de gestion de cette base prenant en compte les spécificités de ce terminal encore inconnu, afin de pouvoir le « piloter ». On parlera alors de pilote ou *« driver »* (programme spécifique) à « installer » sur la base. Si cette base est un ordinateur, la mise à jour est aisée et facilitée par un système d'exploitation puissant ainsi que des fonctions de type « prêtes à tourner » qui vont dynamiquement « accrocher » le nouveau terminal. En revanche, elle est plus problématique quand la base est un microsystème embarqué avec peu de ressources matérielles et logicielles. Il faut alors recharger un nouveau « code programme » dans la base et relancer le système. Cette opération est toujours délicate et parfois sujette à des erreurs irrécupérables.

Un problème qui subsiste dans les solutions de l'art antérieur est le besoin de configurer la « base » lorsque de nouveaux terminaux présentant des fonctions supplémentaires sont ajoutés et connectés à la base. La présente invention vise à résoudre ce problème de dépendance de la base aux nouveaux équipements.

Dans ce dessein, la présente invention cantonne pratiquement la base à un rôle de diffusion/commutation d'informations sans besoin d'évolution et sans que cette base ait à gérer un « parc » de terminaux. La problématique d'inter fonctionnement est en quelque sorte reportée sur les terminaux. Au regard du niveau d'inter fonctionnement relativement simple désiré entre terminaux dans une installation domotique, la présente invention propose un mécanisme de commande « opaque » tel que des terminaux puissent directement agir sur d'autres terminaux sans que la base soit intrinsèquement impliquée dans les fonctionnalités des terminaux qu'elle interconnecte. Ces caractéristiques doivent permettre à un utilisateur d'élaborer simplement des scénarios personnalisés, ou enchaînements automatiques d'actions, tels qu'ils existent actuellement de manière rudimentaire et figée (par exemple dans les alarmes, commande de chauffage, de lumière), sans mise à jour du logiciel de gestion de la base centralisatrice à chaque intégration de terminal offrant de nouvelles fonctionnalités. Les terminaux deviennent « programmables » par email ou par interface HTTP sans intégrer eux-mêmes les protocoles du monde Internet. De par le principe de diffusion, les terminaux ne nécessitent pas de phase d'enregistrement par ladite base, ce mécanisme étant sujet aux aléas de la désynchronisation. En outre, la présente invention est adaptée aux terminaux à haute autonomie notamment sans fil et cycliquement en veille, qui ne peuvent se satisfaire d'une corrélation synchrone entre émetteur et récepteur d'information.

On connaît également, par la demande PCT WO-02/17560, un système de communication directe peer-to-peer entre plusieurs noeuds formant un réseau de communication.

Lorsqu'un événement, tel que l'allumage d'une lampe, est réalisé sur un premier terminal, une instruction à destination d'un second terminal est élaborée à partir de primitives en y ajoutant des paramètres. Cette instruction est transmise par le biais d'une requête renseignant l'adresse destinataire. Ceci impose une syntaxe commune pour communiquer ainsi que la connaissance au préalable des autres noeuds pour leur adresser les requêtes. Cette connaissance nécessite, entre autres, la gestion d'une table de noeuds/identifiants de noeuds (GUID et DUA).

Dans une réalisation « multicast », une requête permet d'atteindre plusieurs noeuds simultanément avec un même message qui, de facto, soulève un problème sur le paramétrage de la fonction à réaliser sur chacun des noeuds destinataires. Cette solution prévoit alors l'utilisation « d'alias », sorte de « meta-fonction », répertoriable dans une table globale listant des actions « globalement » prédéfinies. Cet alias provoque l'exécution ou non d'une action locale à chaque noeud selon une nouvelle table « ATTRIBUTE ALIAS TABLE » qui lui procure les paramètres à prendre « localement ».

Par conséquent, des traitements importants sont nécessaires, soit pour élaborer l'instruction, déterminer l'adresse destinataire et former la requête à émettre, soit pour élaborer l'instruction et la requête « multicast » et permettre l'exécution de celle-ci par les destinataires.

Un autre but de l'invention est donc de diminuer les traitements réalisés au niveau des terminaux/noeuds émetteurs et au niveau des terminaux/noeuds destinataires, sans que la base centrale ne soit intrinsèquement impliquée dans le traitement des instructions.

A cet effet, la présente invention a tout d'abord pour objet un système de communication comprenant une pluralité de terminaux domestiques connectés à un même commutateur par au moins un sous-réseau domestique et une interface, système dans lequel :
- ledit commutateur est apte à commuter des requêtes émises par un premier desdits terminaux à au moins une partie des autres terminaux sur lesdits sous-réseaux,
- ledit premier terminal est configuré pour émettre, sur le sous-réseau le connectant audit commutateur et lors d'un événement, une requête associée à cet événement, ladite requête comprenant une instruction d'exécution destinée à au moins un deuxième terminal d'un sous-réseau connecté audit commutateur.

La présence du commutateur-base est primordiale lorsque deux terminaux sont situés sur deux sous-réseaux distincts mais également lorsque ces deux terminaux sont sur le même sous-réseau. En effet, lorsque les portées de communication des terminaux et/ou du commutateur sont limitées, le commutateur officie en tant que relais entre deux terminaux pouvant être trop éloignés. De même, les protocoles de communication peuvent être dissymétriques entre celui liant un terminal au commutateur et celui reliant deux terminaux entre eux. Le commutateur officie alors également comme relais des requêtes. La commande (instruction) à exécuter par le deuxième terminal est relayée par la base sans qu'aucun traitement de cette dernière (interprétation, modification de syntaxe) ne soit réalisé. Seul le terminal destinataire a la capacité d'interpréter l'instruction envoyée.

Le sous-réseau domestique est à prendre au sens de réseau local permettant de connecter un ou plusieurs terminaux de même type (par exemple, de même protocole de communication) au commutateur. Un ensemble de sous-réseaux domestiques reliés à un même commutateur permet de constituer un réseau local domestique, c'est-à-dire sensiblement dans le même emplacement géographique (une maison ou un appartement, par exemple).

On entend par événement un stimulus détecté ou subi par le terminal ou une commande exécutée par ce même terminal. Le stimulus peut se comprendre comme un ensemble de conditions observées par le terminal (par exemple, déclenchement par réveil, plage de temps et capteur, bouton, détecteur de mouvement, thermostat, détecteur de bris de glace, de gaz ou d'eau, ...), et une commande comme étant une action menée par le terminal (par exemple, la prise d'une photographie pour un appareil photo suite à l'appui sur le déclencheur ou la réception d'une requête sollicitant la prise de photo).

Ainsi, l'instruction d'exécution (sorte de commande à distance) émise par le premier terminal à destination d'un autre terminal n'a pas besoin d'être interprétée par la base. Cette dernière ne fait que commuter la requête du premier terminal vers les autres sous-réseaux. Le terminal destinataire, à réception de la requête, exécutera l'instruction émise. Dès lors, la base n'a pas à être paramétrée lorsque de nouvelles instructions voient le jour (nouvelle syntaxe, nouvelle fonction, ...).

Dans un mode de réalisation, ladite instruction d'exécution est une chaîne de caractères opaque comprenant des données d'identification dudit deuxième terminal. Cette chaîne de caractères est écrite dans la syntaxe interprétable par l'autre terminal de telle sorte qu'à réception, ce dernier exécute l'instruction contenue dans cette chaîne de caractère, alors même que le terminal émetteur ne pouvait pas l'interpréter. Du fait que cette instruction n'est pas interprétable par le terminal qui la stocke, on parle de chaîne de caractères « opaque ».

Par ailleurs, ledit commutateur comprend une première base de données stockant lesdites requêtes transitant par ledit commutateur, et ledit terminal fonctionne selon un système de veille et est apte, à son réveil, à consulter ladite première base de données pour récupérer les requêtes stockées depuis sa dernière mise en veille. Eventuellement, ledit commutateur comprend une deuxième base de données stockant les requêtes de configuration et ladite première base de données stocke les requêtes ordinaires.

On entend par terminal fonctionnant selon un système de veille, un terminal ayant deux états : l'un dit « de veille » où l'activité du terminal est réduite à un strict minimum, par exemple une routine décrémentant un compteur, et l'autre dit « d'activité » où le terminal se comporte comme un module de traitement et de communication conformément à l'utilisation à laquelle il est prévu. Ce système de veille permet de diminuer notablement la consommation électrique d'un tel terminal. Il équipe notamment les terminaux portables à énergie limitée.

Ce mode de réalisation revêt un intérêt majeur lorsque des terminaux d'un même sous-réseau sont asynchrones et ne se réveillent pas au même moment. Le commutateur stocke alors les requêtes émises par un des terminaux et les transmet à l'autre lorsque celui-ci se réveille.

A ce stade, on distingue les requêtes devant affecter le terminal à long terme, par exemple spécifier au terminal qu'à la prise d'une photo il doit émettre une requête à un projecteur pour que ce dernier s'allume. On parle alors de requête de configuration. Une configuration est généralement modifiée par une autre requête de configuration. Les requêtes ordinaires concernent, quant à elles, des actions ponctuelles à exécuter par un terminal, par exemple « prendre une photo » ou « s'allumer 30 s ». L'action doit être réalisée ponctuellement ou pour une durée définie.

On prévoit ainsi que la base stocke de façon distincte les requêtes ordinaires des requêtes de configuration afin qu'un terminal réinitialisé ne « rejoue » que les requêtes de configuration et non celles ordinaires.

Par ailleurs, lesdites requêtes comprennent des données d'identification attribuées par ledit commutateur à réception, et ledit terminal comprend des moyens de stockage des données d'identification de la dernière requête ordinaire traitée et des données d'identification de la dernière requête de configuration traitée. De cette façon, le terminal qui se réveille (passe de l'état de veille à l'état actif) sait où il en est dans l'ensemble des requêtes stockées par le commutateur alors même qu'un certain nombre d'entre-elles ont été reçues pendant sa veille. Pour faciliter la gestion des requêtes, on peut choisir des données d'identification ordonnées, initialisées à zéro au démarrage du commutateur.

Le terminal dispose, dans sa mémoire volatile, de deux compteurs, l'un dédié aux numéros d'identification des requêtes ordinaires et l'autre aux numéros des requêtes de configuration. Ainsi lorsqu'un terminal se réveille, il transmet à la base ces deux numéros de requêtes (qui sont les dernières requêtes reçues par le terminal) et reçoit (ou va demander) en réponse, l'ensemble des requêtes ayant un numéro d'identification supérieur. Eventuellement, le terminal peut émettre plusieurs requêtes successives en incrémentant le numéro d'identification jusqu'au numéro d'identification courant. Ce numéro courant est renseigné dans tous les paquets émis par le commutateur de telle sorte que chacun des terminaux sait combien de requêtes il lui manque. A réception d'une requête, le terminal l'exécute avant de solliciter à nouveau le commutateur pour l'obtention de la requête suivante.

Semblablement, lorsque le terminal est redémarré (lors d'un changement de piles par exemple), le numéro dédié aux requêtes de configuration est mis à zéro, puis ce numéro accompagné du numéro des requêtes ordinaires est envoyé à la base de sorte que les requêtes entre 1 et les données d'identifications courantes du commutateur soient envoyées. Le terminal reçoit en réponse à une ou plusieurs requêtes successives, l'ensemble des requêtes de configuration (qu'il rejoue dans l'ordre des numéros croissants).

En parallèle, au redémarrage le terminal demande au commutateur le numéro courant des requêtes ordinaires et à réception de ce numéro, transmis par le commutateur, le terminal le mémorise dans la mémoire appropriée. Ainsi le terminal ne rejoue pas les anciennes requêtes ordinaires.

Par ailleurs, ledit commutateur comprend une interface réseau reliée à un réseau de communication étendu. Un tel réseau de communication étendu peut être l'Internet, un réseau de téléphonie mobile, le réseau commuté de téléphonie. Un tel réseau peut également supporter différents protocoles de transport tels que HTTP, FTP, UDP ou encore TCP. Il permet l'interopérabilité de plusieurs systèmes similaires et donc la mise en relation de terminaux distants.

Par ailleurs, ledit commutateur comprend, en outre, un interpréteur et des moyens de stockage de variables globales et ledit commutateur est apte à mettre à jour lesdites variables globales à réception d'une requête comprenant une instruction de modification d'une variable globale. Lorsque des données ou variables ont besoin d'être partagées, les terminaux ne se connaissant pas, le commutateur est le seul à même de pouvoir centraliser ces informations.

Particulièrement, ces variables globales sont mémorisées sous la forme d'une liste chaînée procurant au commutateur une accessibilité et une gestion aisée des variables globales.

Selon un format de requête prédéfini et interprétable par la base, les terminaux émettent des requêtes d'opération ou d'affectation portant sur des données globales. Cette requête est interprétée puis exécutée par la base, laquelle base mémorise dans la liste chaînée la valeur de la donnée globale calculée. Lorsqu'un terminal a besoin de la valeur de cette donnée globale, il émet une requête prédéfinie comprenant le nom de la donnée globale souhaitée (le terminal est configuré pour émettre une telle requête lorsqu'il souhaite accéder à une variable globale). La base émet en réponse une requête dont un champ prédéfini comprend la valeur attendue.

Selon un mode de réalisation particulier, ladite interface est apte à émuler des fonctions non supportées par ledit sous-réseau qui est directement relié à ladite interface et/ou par lesdits terminaux de ce sous-réseau. Par exemple, pour un sous-réseau de type X10 limité quant à ses fonctionnalités, un émulateur disposé dans la base à l'interface du sous-réseau permet une transformation des requêtes au format spécifique du sous-réseau. Dans ce cas, ce sous-réseau ne doit pas évoluer au niveau des fonctionnalités pendant la durée de vie afin d'éviter toute re-programmation de la base.

L'invention a également pour objet un réseau de communication pour terminaux domestiques comprenant au moins deux systèmes décrits précédemment, les commutateurs desdits systèmes étant connectés au travers d'un réseau de communication étendu et étant aptes à transmettre sur ledit réseau de communication étendu une requête émise par un premier terminal connecté au commutateur d'un premier desdits systèmes à destination d'un deuxième terminal distance connecté au commutateur d'un deuxième système.

Par ailleurs, ladite requête comprend des données indicatives de la transmission par ledit réseau étendu et lesdits commutateurs sont aptes à encapsuler ladite requête émise par ledit premier terminal dans le format de transport dudit réseau étendu.

L'invention a également pour objet un premier terminal domestique apte à être commandé à distance, ledit premier terminal :
- étant connecté à un sous-réseau domestique
- comprenant des données d'une instruction d'exécution d'un deuxième terminal connecté indirectement audit sous-réseau, lesdites données étant associées à un événement dudit premier terminal et étant sous la forme d'une chaîne de caractères opaque correspondant à une commande du deuxième terminal,
- étant apte à émettre, sur ledit sous-réseau, une requête comprenant ladite instruction à la détection dudit événement.

On entend par terminal connecté indirectement à un sous-réseau domestique, un terminal qui n'appartient pas directement à ce sous-réseau mais pouvant être atteint ou émettre des requêtes vers un autre réseau distant par le biais de passerelles (base) de type commutateur, réseau intermédiaire, ...

Selon différents modes de réalisation, le premier terminal comprend, en outre :
- des moyens de réception de requêtes émises sur le réseau et d'interprétation/traitement de ces requêtes,
- des moyens de stockage de données d'identification des requêtes traitées et des moyens d'interrogation d'un commutateur connectée audit sous-réseau, ledit commutateur stockant des requêtes émises par des terminaux tiers et ledit premier terminal étant apte à interroger ledit commutateur sur des requêtes non traitées.

L'invention a également pour objet un procédé de communication entre terminaux domestiques dans un système tel que présenté précédemment. Le procédé comprend :
- une étape de configuration d'un premier terminal associant à un événement une instruction d'exécution opaque interprétable par un deuxième terminal connecté à ledit commutateur,
- lors dudit événement, une étape de transmission d'une requête par ledit premier terminal à destination dudit commutateur, ladite requête comprenant ladite instruction d'exécution,
- une étape de commutation de ladite requête par ledit commutateur à destination d'une partie au moins des autres terminaux,
- une étape de réception de ladite requête et d'exécution de ladite instruction par ledit deuxième terminal.

Selon différents modes de réalisation :
- ladite étape de configuration comprend une étape d'envoi, depuis un réseau de communication étendu connecté audit commutateur à destination dudit premier terminal, d'une requête comprenant une instruction de configuration, ladite requête étant commutée par ledit commutateur,
- le procédé comprend, lors de ladite étape de commutation, une étape d'enregistrement de ladite requête et de données d'identification uniques associées à la requête dans une base de données dudit commutateur, et une étape d'interrogation ultérieure de ladite base de données par ledit deuxième terminal, ladite interrogation indiquant les données d'identification des requêtes déjà traitées,
- ladite étape d'interrogation a lieu juste après le réveil dudit deuxième terminal et le procédé comprend une étape de mise en veille dudit deuxième terminal après lesdites étapes d'interrogation et d'exécution. Ainsi, l'invention s'applique particulièrement bien aux dispositifs autonomes à énergie limitée dont l'utilisation épisodique par système de veille/réveil permet d'accroître fortement la durée de vie,
- à réception d'un requête comprenant une instruction d'affectation portant sur une variable globale, ledit interpréteur dudit commutateur exécute ladite instruction d'affectation, met à jour ladite liste chaînée des variables globales avec la variable globale modifiée et transmet une requête comprenant ladite variable globale sur l'ensemble desdits sous-réseaux,
- ladite étape de commutation comprend, immédiatement après la réception de ladite requête, la diffusion de ladite requête vers les sous-réseaux de sortie dudit commutateur. On appelle ici sous-réseaux de sortie l'ensemble des sous-réseaux connectés directement audit commutateur.

Les principes mis en oeuvre sont maintenant présentés et une forme de réalisation de l'invention est décrite ci-après à titre d'exemple, en référence aux dessins annexés dans lesquels :
- la figure 1 montre la vue générale du commutateur 300 placé dans son contexte,
- la figure 2 montre le format des paquets traités par l'organe de diffusion 370,
- la figure 3 un exemple d'application mettant en oeuvre l'invention,
- la figure 4 illustre un exemple d'échange de requêtes entre le dispositif 300 et sa périphérie.
- la figure 5 illustre un exemple d'échange de variables entre terminaux.
- la figure 6 précise la structure de données de la file d'attente de requêtes 330 et la liste des variables globales 340.

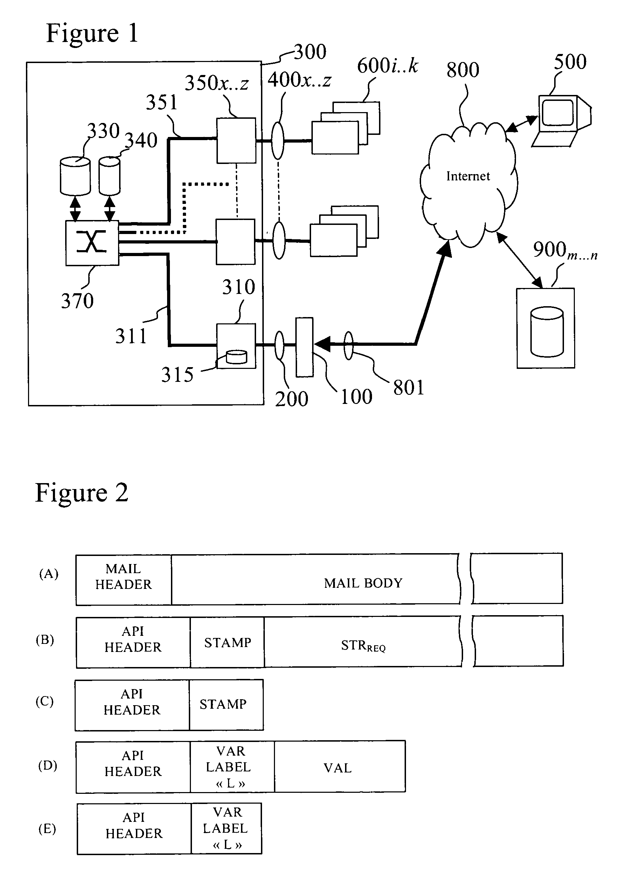

La figure 1 donne la vue générale du système de communication conforme à l'invention.

Selon une caractéristique de l'invention, l'utilisateur peut configurer et commander à distance des appareils dits « terminaux » à son domicile disposés sur des sous réseaux domestiques. Pour cela, il doit envoyer des messages dotés d'une certaine syntaxe et de type e-mail dans une ou plusieurs boîtes aux lettres e-mail lui appartenant. Ces messages peuvent soit commander une activité particulière des terminaux, soit configurer lesdits terminaux pour qu'ils réagissent ultérieurement de manière spécifique à un stimuli quelconque propre à leurs entrées/sorties.

L'utilisateur distant peut émettre ou recevoir des mails via l'ordinateur 500.

Les messages e-mail à émettre sont classiquement gérés par des serveurs distants 900*_{m...n}* selon le protocole SMTP « Simple Mail Transfer Protocol » spécifié par l'IETF (www.ietf.org). Les messages e-mail à recevoir sont classiquement stockés dans des serveurs distants également en 900*_{m...n}* connectés au réseau Internet 800 (par exemple suivant la recommandation protocolaire POP3 « Post Office Protocol Version 3 » décrite par l'IETF), La borne d'accès 100, disposé chez l'usager, fait office de passerelle entre le lien 801 d'interconnexion haut débit (ADSL / câble) au réseau Internet et le réseau local de l'usager 200 habituellement supporté par le protocole Ethernet ; ce réseau local n'est pas forcément filaire et peut être de type 'sans fil' RLAN « Radio Local Area Network » tel IEEE 802.11x. Il est à noter que le dispositif 300 peut être physiquement intégré à la borne d'accès 100 qui par ailleurs peut contenir d'autres fonctions de passerelle tels le routage et le filtrage de paquets IP « *Internet Protocol* » (firewall).

Le commutateur 300 relié au réseau local 200 est d'autre part connecté aux terminaux 600*_{i...k}* via un ou plusieurs sous réseaux 400x...z. Ces sous réseaux domestiques sont hétérogènes et de différentes natures de type filaire ou sans fil. Par exemple, le réseau filaire domestique X10 (de X-10 Incorporated, USA) permet de commander des appareils électriques à distance par courant porteur sur le secteur (110/220V). Les réseaux domestiques sans fil tels IEEE 802.15.4 (Zigbee), Bluetooth^{™}, Wifi ou autre réseau sans fil propriétaire permettent de piloter de petits terminaux autonomes.

Les terminaux 600i...k peuvent avoir des contraintes de différentes natures notamment la nécessité de minimiser leur consommation d'énergie. Cette contrainte se pose pour les terminaux sans fil alimentés sur piles ou batteries. Dans les faits, on constate que la réception continue de signaux radioélectriques consomme pratiquement autant d'énergie que leur émission (avec des puissances d'émissions modestes comme celles rencontrées sur les réseaux domestiques), ce qui pose un réel problème pour des appareils ayant la contrainte de rester connectés sur un réseau local. Une solution classique pour pallier ce problème consiste à alterner des périodes longues de sommeil et courtes d'activité en réception radio. Suivant un mécanisme de scrutation (« *polling* »), le terminal peut ainsi périodiquement interroger sa « base » (le dispositif 300), toutes les minutes par exemple, puis se rendormir ensuite ou se réveiller périodiquement lors de « rendez-vous » ou « fenêtre » pour écouter si la base lui signale un message à son attention. Ce mode de fonctionnement induit un « asynchronisme » entre la disponibilité d'un message sur la « base » et sa prise en compte par le terminal. A contrario, un terminal alimenté sur secteur pourra rester en réception radio en permanence et prendre en compte un message arrivant sur la « base » de manière instantanée et « synchrone ». Selon une caractéristique de l'invention, le dispositif gère à la fois la nature « synchrone » ou « asynchrone » des terminaux.
Il est à noter que la réactivité d'un terminal asynchrone peut être améliorée et devenir « pseudo-synchrone » en lui faisant « écouter » à un rythme plus soutenu le réseau, mais toujours en minimisant le rapport « phase d'activité/phase d'inactivité ». Pour effectuer cette observation, le terminal se réveille une courte période par exemple 200 microsecondes à chaque seconde ; la « base » en vis-à-vis émet un train d'informations de « signalisation » de 1,1 seconde par exemple pour « forcer le réveil » du/des terminaux, de sorte que la période d'activité dudit terminal est assurée d'être incluse dans ce laps de temps. Si durant sa courte période d'activité, le terminal dénote un signal radio particulier basé par exemple sur la « détection de porteuse » ou/et une séquence binaire particulière contenue dans le train d'information, il peut statuer qu'il doit alors opérer une requête vers sa base conformément aux dispositions objets de l'invention.

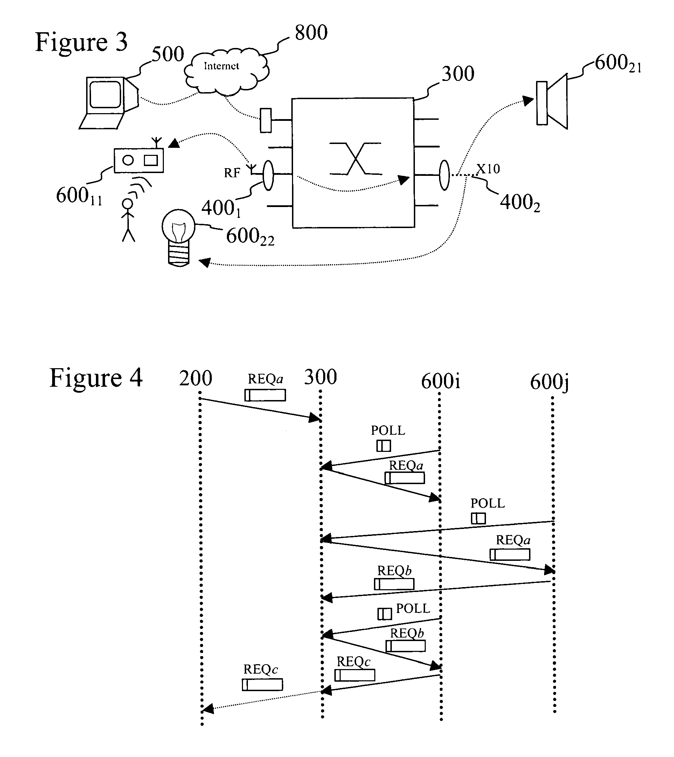

La figure 3 donne l'exemple d'une installation dotée de la présente invention. L'utilisateur programme à distance par message email un appareil photo sans fil 600₁₁ doté d'un détecteur de mouvement. De manière autonome et selon le scénario défini dans le mail de l'utilisateur, la détection d'un mouvement va provoquer l'allumage d'une lampe 600₂₂ puis la prise d'une photo par 600₁₁ retournée à l'utilisateur par mail, enfin une alarme 600₂₁ va être déclenchée.

### DESCRIPTION DU COMMUTATEUR 300

Le commutateur dispose d'une interface 310 vers internet. Suivant l'exemple de réalisation, celle-ci contient une pile classique de protocoles SMTP/POP3/TCP/IP lui permettant de recevoir ou émettre des messages e-mails. Un serveur HTTP embarqué *« HyperText Transfer Protocol* » (protocole de transport hypertexte) supportant des requêtes CGI *« Common Gateway Interface* » (interface de passerelle commune) décrites par l'IETF permettent à l'utilisateur de consigner dans une table de descripteurs 315, à partir d'une interface de type « WEB », les paramètres nécessaires aux protocoles POP/SMTP pour accéder à des serveurs mails. Ces mêmes protocoles HTTP/CGI peuvent également fournir les moyens pour émettre directement des requêtes vers le commutateur 300.

L'interface 310 interroge périodiquement (d'autant plus fréquemment que l'on souhaite un système réactif) les boîtes emails selon leurs paramètres respectifs (nom de serveur, nom d'abonné, mot de passe). L'interface télécharge les messages e-mails stockés sur les serveurs dans le format représenté figure 2 (A) puis les analyse en supprimant certaines encapsulations protocolaires et sépare les différents champs (expéditeur, objet, contenu) en des chaînes de caractères simples de type ASCII *« American Standard Code for Information Interchange* » (code américain normalisé pour l'échange d'information). Le téléchargement de message peut provoquer ou non un effacement des messages du serveur selon le mode souhaité par l'utilisateur. Le module antémémoire exposé dans la demande de brevet FR 04 01312 sera utile si les messages ne sont pas effacés. L'interface 310 ne doit en effet prendre en compte un message donné qu'une seule fois même s'il reste sur le serveur.

Selon une variante de réalisation du dispositif 300, l'interface 310 dispose des moyens pour émettre ou recevoir des requêtes encapsulés dans des paquets UDP *« User Datagram Protocol* » (protocole de diagramme utilisateur) vers ou provenant autres dispositifs 300' distants répartis sur Internet. L'adresse implicite IP (ou le nom de domaine du dispositif distant avant résolution de l'adresse IP par un DNS *« Domaine Name Serveur»* - serveur de nom de domaine - distant) et le port UDP associés au dispositif distant sont consignés dans la table 315. De manière alternative, ces paramètres sont explicitement spécifiés dans la requête sortante. L'interface est alors en permanence à l'écoute de paquets UDP sur un port donné lui aussi spécifié dans la table 315. Selon une autre variante utile pour fiabiliser les transferts, le protocole TCP *« Transmission Control Protocol »* (protocole de contrôle de transmission) se substitue à UDP et une connexion TCP est établie entre les dispositifs 300 et 300' préalablement à tout échange de requêtes. L'interface dispose alors des moyens pour délimiter les requêtes dans le flot TCP de sorte que les requêtes sont reconstituées. Dans encore un autre mode de réalisation, le réseau Internet peut être substitué par un réseau de télécommunications mobiles. Les dispositifs 300 et 300' communiquent alors par messages électroniques SMS *(Short Message Service)* ou MMS *(Multimedia Message Service).*

Cette liaison entre les dispositifs 300 et 300' permet l'établissement d'un réseau virtuel global dans lequel tout dispositif 600 (relié en local au commutateur 300) peut piloter à distance tout dispositif 600' relié en local à un commutateur distant 300'. Une requête à envoyer à un dispositif connecté à un commutateur distant comprend des informations d'emails (adresse destinataire, objet, ...). Le commutateur connecté à l'émetteur envoie alors un email avec ces informations au commutateur distant, lequel transmet la requête initiale.

La commande d'appareils dans l'habitat ne doit pas être autorisée à un inconnu et il est donc nécessaire de limiter cette possibilité. A cette fin, un mot de passe ou tout système de sécurisation équivalent limitant le « droit d'accès » est inclus dans le message de commande. La comparaison avec le vrai mot de passe consigné préalablement dans la table 315 permet d'écarter les mails « normaux » ne contenant pas de spécificités liées à l'objet de l'invention ou les courriers indésirables.

La partie utile du message email qui est soumise à l'organe de diffusion 370 est une chaîne de caractères appelée « texte de requête » ou instruction d'exécution et notée STR. Le texte de requête peut être spécifié en l'objet du message email ou dans son contenu (corps). Des requêtes longues devront l'être bien évidemment dans son contenu. Le texte de requête peut être décomposé en une suite d'instructions élémentaires : {Instruction₁ ; Instruction₂ ; [...] ; Instructionₙ} et possède comme les langages informatiques une syntaxe et une grammaire dont la définition sort du cadre de l'invention. La syntaxe utilisée pour les « Instructions » des requêtes est spécifique à chaque dispositif ou groupe de dispositifs auquel la requête est adressée, tandis qu'un grand nombre de dispositifs ne pourront pas interpréter ces instructions.

L'organe de diffusion des requêtes 370 reçoit des requêtes provenant d'Internet par l'interface 310 (lien fonctionnel 311) et des requêtes émanant des terminaux 600 via les interfaces de sous réseaux 350 (lien fonctionnel 351). Celles-ci sont homogènes et présentées à l'organe 370 sous la forme d'un paquet représenté en figure 2 (B). Une entête *« API header »* signale simplement qu'il s'agit d'une requête contenant une chaîne de caractères STR par opposition à d'autres types de paquet dont l'intérêt sera vu plus loin. Par simplicité de langage et quand le contexte le permet, on nomme ici requête une chaîne de caractères formant « une suite d'instructions » en faisant abstraction de la notion de paquet.

Les interfaces de sous réseaux 350x..z sont en charge de mettre en forme des transactions présentes avec un format spécifique sur le sous réseau 400 en un format compatible avec l'organe de diffusion 370 et vice-versa. Elles sont fonctionnellement d'une faible utilité quand le protocole de sous réseau transporte des paquets de données et les terminaux supportent directement les spécificités de l'invention. Dans le cas contraire, elles doivent assurer un inter fonctionnement et une translation entre les deux formats. En outre certains protocoles tel le X10 sont très rudimentaires et ne supportent pas des débits de données conséquents. Dans ces derniers cas, l'interface de sous réseau émulent les fonctions manquantes aux terminaux et se mettent « à leur place » en assurant une fonction de *« proxy terminal»* vis-à-vis de l'organe de diffusion 370.

Le commutateur 300 propose deux niveaux de communication entre terminaux :
- un niveau « requête » permettant aux terminaux de s'échanger des requêtes,
- un niveau « variable globale » permettant aux terminaux de s'échanger des variables.

### Opérations sur les requêtes.

Les instructions d'une requête peuvent être traitées de différentes manières par un terminal. Il peut :
(1) les ignorer parce qu'il n'est pas concerné et ne reconnaît pas de mots « clé »,
(2) les interpréter pour se configurer, déclencher une action, les intégrer en temps que séquence de programme qui va modifier son comportement,
(3) les stocker pour, selon certaines conditions, les soumettre ultérieurement au commutateur en temps que « requête » pour de tiers terminaux ou pour l'accès Internet.

Le cas (2) demande une compréhension par terminal de la syntaxe utilisée, mais les instructions du cas (3) peuvent être stockées puis restituées au commutateur comme une simple chaîne de caractères opaque et sans signification. L'exemple suivant permet de bien comprendre cette notion « d'opacité» :
Un utilisateur envoie la requête de configuration suivante dans un email que le commutateur reçoit :[THERMOSTAT CONFIG: Si TEMP > 21°C envoyer « *CHAUDIERE : OFF » ;* Si TEMP < 19°C envoyer « *CHAUDIERE : ON* »]
Le commutateur la diffuse alors vers l'ensemble des sous-réseaux 400. Les terminaux qu'ils soient synchrones ou asynchrones vont tenter de l'analyser et seul le terminal THERMOSTAT va la reconnaître selon les mots clé qu'elle renferme. Si plusieurs THERMOSTAT existent, on aura veillé au préalable à renseigner un registre propre à chacun d'eux (par exemple un sélecteur-codeur manuel) permettant de distinguer THERMOSTAT1 de THERMOSTAT2. Le thermostat va alors la prendre en compte et l'interpréter bien que les chaînes S1 : *« CHAUDIERE : OFF »* et S2 : *« CHAUDIERE : ON* » restent « opaques » pour lui c'est-à-dire sans signification et non interprétables mais S1 et S2 sont mémorisées en temps que chaînes de caractères liées à des conditions propres au terminal. Selon la température mesurée sur son capteur, et après franchissement d'un seuil spécifié dans la requête, c'est-à-dire lors d'un stimulus (ici T>21°C ou T<19°C), il peut émettre la requête S1 ou S2 vers le commutateur. De manière analogue, seul le type CHAUDIERE va reconnaître le message S1 ou S2 et l'interpréter pour changer son état interne. Le terminal THERMOSTAT a ici déclenché le terminal CHAUDIERE sans comporter de spécificités propres à ce dernier terminal.

Les requêtes commutées apparaissent aux terminaux dans l'ordre « premier rentré premier sorti ». Il est à noter que cette file d'attente a une entrée et autant de sorties virtuelles que de terminaux car la « sortie » d'une requête pour un terminal donné ne rend pas la requête inaccessible pour les autres terminaux.

Le démarrage, consécutif à un changement de piles par exemple, d'un terminal longtemps après la disponibilité d'une requête de configuration qui lui est destiné nécessite que cette requête soit toujours disponible, le commutateur doit donc garder cette requête en mémoire préférentiellement à des requêtes ordinaires. En effet, le commutateur ne peut stocker indéfiniment les requêtes et doit donc avoir une politique de sorte que lesdites requêtes sont éliminées quand les terminaux n'en ont plus usage. Une telle politique peut être basée sur le temps, le volume (limitation de la mémoire disponible dans la base), la nature ou l'origine des requêtes. Selon une variante de réalisation, les requêtes de configuration sont stockées dans une unique file d'attente 330' distincte de l'unique file d'attente 330 dédiée aux requêtes ordinaires, lesquelles requêtes sont discriminées selon leur origine (boîtes email différentes) ou la reconnaissance du mot clé 'CONFIG' précisé dans la requête.

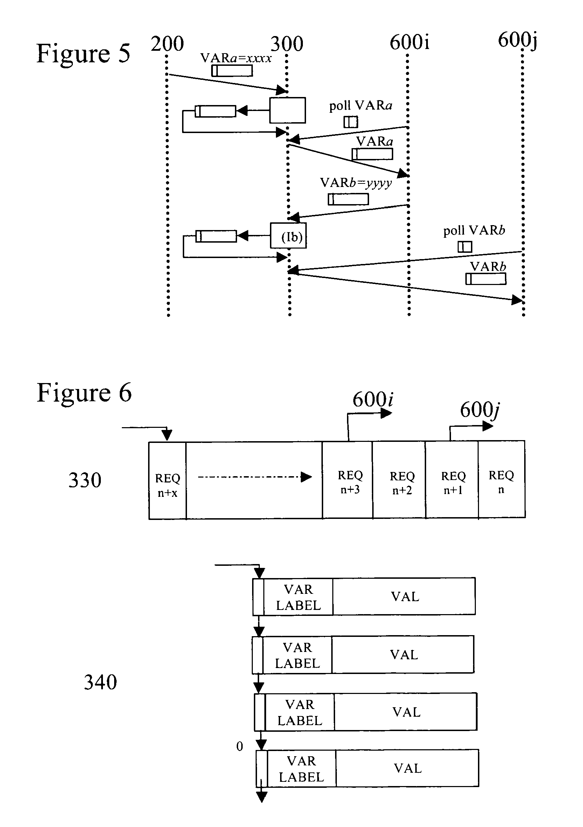

La figure 6 représente la structure de données de la file d'attente 330. Les requêtes y sont introduites et extraites par le commutateur. Celui-ci présente à chaque terminal une file d'attente virtuelle qui lui est propre. Cette file d'attente a donc fonctionnellement plusieurs pointeurs de sortie, soit « un pointeur par terminal ». L'attention du lecteur est attirée sur le fait que le commutateur ne connaît pas le nombre de terminaux connectés et ne gère pas de contexte par terminal, la mémorisation du pointeur de sortie est donc à la charge du terminal, cette valeur étant alors transmise au commutateur dans une requête émise par le terminal (figure 2 C).

Selon l'exemple de réalisation, le commutateur assigne un numéro discriminant croissant *STAMP* à chaque requête. Le terminal, sollicitant au commutateur la requête sortante en tête de sa file d'attente, soumet le dernier discriminant *STAMP* de la dernière requête reçue, de sorte que le commutateur lui renvoie la requête de discriminant immédiatement supérieur. Plusieurs files d'attente « virtuelles » peuvent ainsi être gérées sans que le commutateur ait à maîtriser le nombre de terminaux qui le sollicitent. Le discriminant STAMP assigné par le commutateur est calculé à sa discrétion et peut être aussi un pointeur ou une valeur semblant arbitraire mais intelligible par lui.

Selon une amélioration, le terminal spécifie au commutateur et conjointement au discriminant *STAMP,* un index OFFSET signalant qu'il souhaite la fourniture du champ STR de la requête de manière décalée c'est-à-dire en omettant les 'OFFSET' premiers caractères. Cette amélioration est particulièrement utile lorsque la longueur maximale du champ STR de la requête est incompatible avec la taille maximale des paquets sur les sous réseaux qui entraîne une troncature de la fin de l'information STR.

De manière générale, les éléments d'une file d'attente sont manipulés sous forme de pointeur spécialement lorsque ces éléments sont de taille variable, ce qui est le cas de chaînes de caractères comme STR. Le système objet de l'invention pouvant faire partie d'un système plus vaste, un pointeur de requête peut pointer sur une structure de données complexe mais telle que la chaîne de caractères STR puisse être *in fine* accédée. Par souci de simplicité, de tels niveaux d'indirection liés à l'implémentation sont ici ignorés.

La figure 4 représente un exemple de chronogramme temporel d'échanges de requêtes.

L'interface Internet 310 et les terminaux peuvent envoyer des requêtes dans le commutateur. Selon l'exemple de réalisation et pour obtenir une requête en tête de file, un terminal fait une demande au commutateur par un paquet dit « POLL » contenant le discriminant *STAMP* précité et le commutateur lui retourne la requête de discriminant *STAMP+1.* Eventuellement, le commutateur retourne l'ensemble des requêtes reçues depuis le discriminant STAMP, c'est-à-dire toutes les requêtes dont le discriminant est supérieur à STAMP. Le terminal 600 met alors à jour la valeur STAMP qu'il stocke dans une mémoire avec la valeur du discriminant de la dernière requête reçue (donc le STAMP le plus élevé).

Dans un mode de réalisation avancé attaché à la présence des deux files d'attente 300 et 300' évoquées précédemment, le terminal 600 stocke deux valeurs STAMP et STAMP', l'une (STAMP) associée aux requêtes ordinaires et l'autre (STAMP') associée aux requêtes de configuration. Lors du démarrage du dispositif 600 (par exemple après un débranchement ou un changement de piles/batterie), le discriminant STAMP' des requêtes de configuration n'est pas pris en compte (ou réinitialisé) afin que le dispositif ré-exécute l'ensemble des requêtes de configuration qui le concerne. Parallèlement, le commutateur fournit son pointeur courant STAMP_{CURRENT} (valeur de la dernière requête marquée par le commutateur) au terminal, lequel le mémorise dans sa mémoire volatile pour s'y référencer par la suite pour les requêtes ordinaires ultérieures.

### Opérations sur les variables globales.

L'intérêt de ce niveau est de donner la possibilité aux terminaux de s'échanger des données pouvant prendre une grande variété de valeurs possibles ainsi que de pouvoir se synchroniser sur des états ou variables globales disponibles de manière permanente.

Le nommage et l'accès par le commutateur à des variables globales peuvent être effectués de différentes façons, par exemple par un numéro indexant un tableau (1), par un label renvoyant à un numéro suivant un mail de configuration à l'attention du commutateur établissant préalablement une association entre label et numéro (2) ou par un label dynamiquement comparé dans une liste de labels renvoyant à des variables globales déjà assignées (3). Cette dernière méthode est ici choisie selon l'exemple de réalisation.

La variable proprement dite peut être de type « drapeau » soit un bit, ou de largeur plus importante (8 bits, 16, 32 bits etc...).

La figure 5 représente un chronogramme temporel de transactions sur des opérations sur les variables globales. La figure 6 représente la structure de données de la liste de variables globale 340 selon une liste chaînée.

Pour identifier les requêtes d'affectation portant sur les variables globales, un bit de marquage dans l'ente^te peut être ajouté afin que le commutateur sache quelles requêtes sont à interpréter en local sans réémission vers les sous-réseaux de sortie du commutateur. Eventuellement, le commutateur peut essayer d'interpréter toutes les requêtes en transit et considérer comme siennes celles qu'il peut interpréter et exécuter.

### Ecriture de variable

Le commutateur peut grâce à un interpréteur interne exécuter des instructions ayant attrait à l'affectation d'une variable globale. L'activité de l'interpréteur est représentée par (la), (1b) sur la figure 5.

Une instruction d'affectation comporte une expression arithmétique ou logique interprétable par l'interpréteur interne du commutateur, par exemple : « *var1 = 2*variable3 + variable5+* 12 », où *var1, variable3* et *variable5* sont les labels représentants des variables.

Plus généralement, dans l'instruction d'affectation *L* = *VAL,* le terme *VAL* est calculé par ledit interpréteur en une valeur numérique simple, laquelle est ensuite stockée dans la variable globale de label *L* qui est alors recherché par le commutateur dans sa liste des labels des variables déjà en mémoire. Si le label *L* est présent, la variable associée reçoit directement la nouvelle valeur *VAL* sinon, un nouveau descripteur de variable est préalablement créé avec un champ label affecté de *L*. La variable *L* est donc mise à jour puis un paquet représenté figure 2 (D) est diffusé par l'organe 370 à l'attention des terminaux synchrones.

Selon une variante de réalisation et pour faire l'économie dudit interpréteur, un paquet représente en figure 2 (D) émis par les terminaux peut également provoquer une affectation d'une constante *VAL* à la variable *L*. Selon une autre variante, ledit l'interpréteur fait une association entre des mots clé et des affectations de constante à des variables prédéfinies, lesquelles affectations sont exécutées par l'organe 370. Ainsi la requête « SET ALARM ON » est traduite par l'interpréteur par l'affectation de la constante '1' à la variable ALARM par exemple ; le nommage des variables peut, bien entendu, utiliser une voie plus simple telle que les méthodes (1) et (2) précitées.

### Lecture de variable

Les terminaux asynchrones opèrent une opération d'interrogation dite « *poll VAR »* sur un paquet représente en figure 2 (E) et l'organe 370 leur retourne la variable dans un format représenté en figure 2 (D). Si le label de la variable n'existe pas, une valeur arbitraire est retournée (exemple : 0).

### Description de l'organe de diffusion 370.

L'organe de diffusion des requêtes 370 reçoit et émet des paquets selon le format représenté sur la figure 2 (B) et discrimine leur type exact selon un champ de API HEADER. API HEADER contient par ailleurs des sous champs spécifiques nécessaires au bon fonctionnement du système mais non utiles à la bonne compréhension du système objet de l'invention.

A la réception d'une requête entrante sur un lien fonctionnel 351 ou 311, l'organe 370 diffuse cette requête sur ces sorties 351 et 311. A noter que sur des liens fonctionnels 351 particuliers ne supportant qu'un terminal, la requête n'est pas retournée lorsqu'elle en émane. Il en est de même du lien Internet 311.

La diffusion immédiate d'une requête sortante de l'organe 370 permet de renseigner les terminaux synchrones en écoute permanente sur leur sous réseau. D'autre part, l'organe 370 mémorise la requête entrante dans la file d'attente 330 selon la procédure déjà décrite. Les terminaux asynchrones opèrent une opération d'interrogation par un paquet représenté en figure 2 (C) et l'organe 370 leur retourne une requête dans un format représenté en figure 2 (B) suivant la procédure déjà décrite.

Selon une variante de réalisation, la diffusion immédiate d'une requête sortante est substituée par la diffusion d'un paquet de notification signalant aux terminaux synchrones la présence d'une nouvelle requête en attente de discriminant *STAMP.* Le mode opératoire suivant cette notification est alors le même que pour les terminaux asynchrones. Cette variante est particulièrement utile lorsque les requêtes sont trop longues pour être contenues dans un seul paquet.

Selon l'exemple de réalisation, les terminaux possèdent les moyens d'interpréter et émettre des requêtes ainsi que mémoriser des requêtes de configuration. Mais si ces moyens sont insuffisants, l'interface de sous réseau auquel ils sont raccordés peut se substituer à eux pour émuler leurs fonctions manquantes selon le mécanisme de *« proxy »* déjà évoqué et peut quasiment se comporter comme un « terminal virtuel ». L'inconvénient de telles insuffisances est de demander un ajout dans les fonctionnalités du commutateur 300. Cependant dans la pratique, la rusticité du sous réseau est la cause limitante de sorte que les ajouts dans le commutateur portent leur bénéfice sur l'ensemble des terminaux connectés audit sous réseau si ceux-ci ont des fonctions relativement similaires comme dans le cas du protocole X10™. Par exemple, la requête « POWER ON A12 » destinée au périphérique A12 est traduite, par l'interface spécifique X10™ présente dans le commutateur, en une modulation du secteur conforme X10™ telle que le périphérique « A12 » se verra recevoir le « code fonction » « On » selon la terminologie du protocole X10™.

Le système objet de l'invention peut faire l'objet de nombreux perfectionnements non détaillés ici. Par exemple, des requêtes peuvent comporter des mots clé particuliers permettant d'adresser comme des « terminaux virtuels », le commutateur, l'interface Internet 310 et les interfaces de sous réseaux en vue de leur configuration par l'utilisateur. De même, un inconvénient du principe de diffusion est la multiplicité des requêtes pouvant inutilement transiter sur les sous réseaux et la sollicitation inutile des terminaux en découlant. Selon une première méthode d'optimisation, le commutateur limite la diffusion des requêtes en opérant une opération dite de *« parsing* » (analyse syntaxique ou lexicale) ; les instructions des requêtes sont analysées unitairement puis diffusées sélectivement vers les sous réseaux considérés par ces instructions. La structure de données de la file d'attente 370 devient dès lors plus complexe. Selon une première méthode d'optimisation, la requête peut comporter des informations renseignant sur la nécessité pour l'interface de sous réseau de la diffuser. Par exemple, il est inutile d'envoyer un mail à chaque requête commutée vers l'interface 310, un champ explicite peut en indiquer donc la nécessité avec éventuellement l'adresse email du destinataire si celle-ci n'est implicitement consignée en 315.

Le système objet de l'invention peut être réalisé avec les microcontrôleurs disponibles sur le marché munis de RAM, ROM et autres périphériques aptes à piloter les couches physiques des sous réseaux 400 ainsi que le réseau local 200 de l'utilisateur.

## Revendications

1. Système de communication comprenant une pluralité de terminaux domestiques (600) connectés à un même commutateur (300) par au moins un réseau (400) et une interface (350), lesdits terminaux comprenant des instructions d'exécution associées à des événements, lesdits terminaux étant configurés pour émettre, lorsqu'un événement est détecté et sur le réseau les connectant audit commutateur, une requête comprenant l'instruction d'exécution associé à l'événement détecté,
**caractérisé en ce que** :
- ledit commutateur (300) est apte à recevoir une requête d'un desdits terminaux et à diffuser ladite requête sur au moins une partie desdits réseaux (400),
- ladite instruction d'exécution est stockée, sur un premier terminal, dans un langage d'exécution d'un deuxième terminal.

2. Système selon la revendication précédente, dans lequel lesdites premier et deuxième terminaux appartiennent à des réseaux hétérogènes interconnectés au moyen dudit commutateur et présentent des langages d'exécution différents.

3. Système selon l'une des revendications précédentes, dans lequel le commutateur comprend une file d'attente stockant lesdites requêtes reçues par le commutateur, ladite file d'attente comprenant une pluralité de pointeurs associés à chacun desdits terminaux de sorte à définir une file d'attente virtuelle pour chacun des terminaux.

4. Système selon l'une des revendications précédentes, **caractérisé en ce que** ledit commutateur comprend une première base de données (330) stockant lesdites requêtes transitant par ledit commutateur (300), et lesdits terminaux (600) fonctionnent selon un système de veille et sont aptes, à leur réveil, à consulter ladite première base de données pour récupérer les requêtes stockées depuis sa dernière mise en veille.

5. Système selon la revendication précédente, **caractérisé en ce que** ledit commutateur comprend une deuxième base de données (330') stockant des requêtes de configuration pour associer, dans un terminal, un événement à une instruction d'exécution et ladite première base de données (330) stocke lesdites requêtes émises par un terminal lors d'un événement.

6. Système selon l'une quelconque des revendications précédentes, **caractérisé en ce que** ledit commutateur (300) comprend, en outre, un interpréteur et des moyens de stockage (340) de variables globales et ledit commutateur (300) est apte à mettre à jour lesdites variables globales à réception d'une requête comprenant une instruction de modification d'une variable globale.

7. Système selon l'une quelconque des revendications précédentes, **caractérisé en ce que** ladite interface (350) est apte à émuler des fonctions non supportées par ledit réseau (400) qui est directement relié à ladite interface et/ou par lesdits terminaux (600) de ce réseau.

8. Réseau de communication pour terminaux domestiques (600) comprenant au moins deux systèmes selon l'une quelconque des revendications précédentes, les commutateurs (300) desdits systèmes étant connectés au travers d'un réseau de communication étendu (800) et étant aptes à transmettre sur ledit réseau de communication étendu une requête émise par un premier terminal (600) connecté au commutateur d'un premier desdits systèmes à destination d'un deuxième terminal distance connecté au commutateur d'un deuxième système.

9. Terminal domestique (600) comprenant :
- des données d'instruction d'exécution pour commander un deuxième terminal auquel il est connecté au moyen d'un réseau (400), lesdites données étant associées à un événement dudit terminal,
- des moyens aptes à émettre, sur ledit réseau (400), une requête comprenant ladite instruction à la détection dudit événement
dans lequel ladite instruction d'exécution est stockée sous la forme d'une chaîne de caractère dans un langage d'exécution dudit deuxième terminal.

10. Procédé de communication entre terminaux domestiques dans un système selon l'une quelconque des revendications 1 à 5, comprenant :
- une étape de configuration d'un premier terminal (600) pour stocker une instruction d'exécution associée à un événement, ladite instruction d'exécution étant stockée dans un langage d'exécution d'un deuxième terminal (600') connecté audit commutateur (300),
- lors dudit événement, une étape de transmission d'une requête par ledit premier terminal à destination dudit commutateur, ladite requête comprenant ladite instruction d'exécution,
- une étape de commutation de ladite requête par ledit commutateur (300) à destination d'une partie au moins des autres terminaux,
- une étape de réception de ladite requête et d'exécution de ladite instruction par ledit deuxième terminal.

11. Procédé selon la revendication précédente, **caractérisé en ce que** ladite étape de configuration comprend une étape d'envoi, depuis un réseau de communication étendu (800) connecté audit commutateur (300) à destination dudit premier terminal (600), d'une requête comprenant une instruction de configuration, ladite requête étant commutée par ledit commutateur.

12. Procédé selon l'une des revendications 10 et 11, **caractérisé en ce qu'**il comprend, lors de ladite étape de commutation, une étape d'enregistrement de ladite requête et de données d'identification uniques associées à la requête dans une base de données (330) dudit commutateur (300), et une étape d'interrogation ultérieure de ladite base de données (330) par ledit deuxième terminal, ladite interrogation indiquant les données d'identification des requêtes déjà traitées.

13. Procédé selon l'une des revendications 10 à 12 mis en oeuvre dans un système selon la revendication 6, **caractérisé en ce que**, à réception d'une requête comprenant une instruction d'affectation portant sur une variable globale, ledit interpréteur dudit commutateur (300) exécute ladite instruction d'affectation, met à jour lesdites variables globales (340) avec la variable globale modifiée et transmet une requête comprenant ladite variable globale sur l'ensemble desdits réseaux (400).
